# EUROPÄISCHE PATENTSCHRIFT

(11) **EP 2 696 176 B1**
(45) Veröffentlichungstag und Bekanntmachung des Hinweises auf die Patenterteilung: **08.04.2015**
(21) Anmeldenummer: 12179494.5
(22) Anmeldetag: 07.08.2012
(51) Int. Cl.: G01F 3/10

(54) **Zahnraddurchflussmesser**
Cogged wheel flow meter
Débitmètre à roue dentée

(43) Veröffentlichungstag der Anmeldung: 12.02.2014
(73) Patentinhaber: KEM Küppers Elektromechanik GmbH, 85757 Karlsfeld (DE)
(72) Erfinder: Frisch, Jürgen, 86420 Diedorf (DE); Bieling, Harald, 85256 Pasenbach (DE); Steuer, Thomas, 85221 Dachau (DE)
(74) Vertreter: Heim, Florian Andreas

(56) Entgegenhaltungen:
- EP-A1- 0 393 294
- WO-A1-2007/104517
- DE-U1- 9 418 104
- JP-U- S6 251 232

## Beschreibung

Die vorliegende Erfindung bezieht sich auf einen Zahnraddurchflussmesser nach dem Oberbegriff des Anspruchs 1.

Zahnraddurchflussmesser können prinzipiell zur Messung beliebiger Fluidströme eingesetzt werden. Bei diesen Fluiden kann es sich zum Beispiel um Lacke, Klebstoffe, Ethanol, Lösungsmittel, Additive, Kleinstmengen an Chemikalien, Benzin oder Diesel handeln. Somit kann insbesondere die Einspritzung bei Dieselmotoren überprüft werden.

Ein gattungsgemäßer Zahnraddurchflussmesser zur Durchflussmessung eines Fluids weist eine Zahnradkammer auf, in welcher mindestens ein Messzahnrad angeordnet ist, mit einem Boden und einem Deckel, welche die Zahnradkammer an Stirnseiten des mindestens einen Messzahnrads begrenzen, wobei mittig zu jedem Messzahnrad jeweils ein Drehschaft vorgesehen ist, wobei jedes Messzahnrad drehbar gelagert ist und ein Fluid zum Drehen des mindestens einen Messzahnrads durch die Zahnradkammer leitbar ist. Zudem weist solch ein Zahnraddurchflussmesser eine Messeinrichtung zum Ermitteln einer Zahnraddrehung und Auswertemittel zum Ermitteln eines Durchflusses des Fluids durch die Zahnradkammer auf Grundlage der Zahnraddrehung auf.

Bei diesen Zahnraddurchflussmessern wird das Fluid zwischen benachbarten Zähnen des mindestens einen Messzahnrads und einer Wand der Zahnradkammer durch die Zahnradkammer befördert. Toleranzen in der Bewegung des mindestens einen Messzahnrads beeinflussen die Durchflussmenge des Fluids und führen so zu einer Beeinträchtigung der Messgenauigkeit.

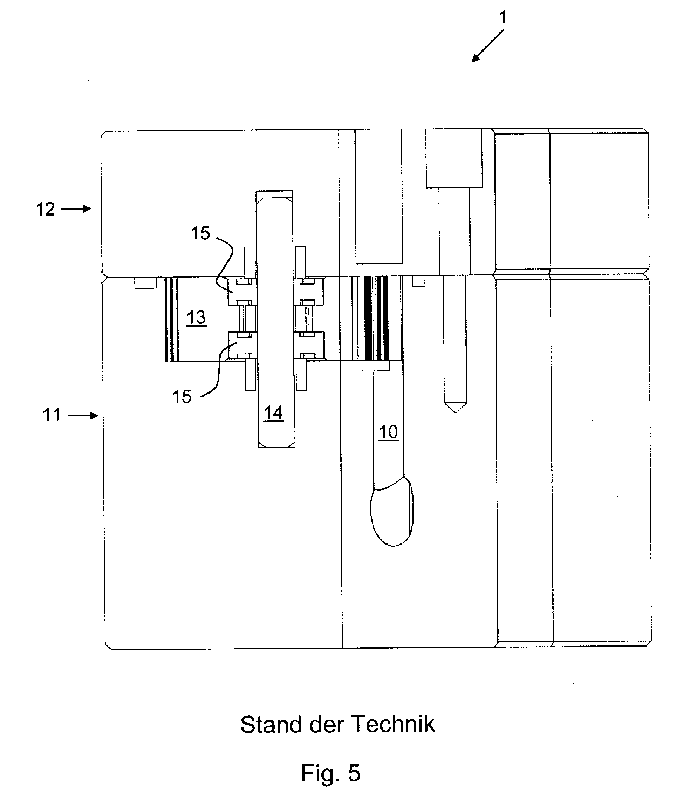

Ein Querschnitt eines herkömmlichen Zahnraddurchflussmessers 1 ist schematisch in Fig. 5 dargestellt. Dieser weist mindestens ein Messzahnrad 13 auf, welches in einer Vertiefung eines Hauptkörpers 11 aufgenommen ist. Diese Vertiefung wird durch einen Deckel 12 zum Bilden einer Zahnradkammer geschlossen. Ein Fluid, dessen Durchfluss zu messen ist, gelangt über eine Zuführleitung 10 im Hauptkörper 11 in die Zahnradkammer. Beim Durchströmen von dieser dreht sich das Messzahnrad 13. Die Drehung des Messzahnrads 13 wird erfasst, um die Durchflussmenge zu bestimmen.

Zur drehbaren Lagerung des Messzahnrads 13 ist durch dessen Zentrum ein Stab oder eine Drehachse 14 angeordnet. Diese erstreckt sich vom Hauptkörper 11 durch die Zahnradkammer in den Deckel 12 hinein. Das Messzahnrad 13 ist an der Drehachse 14 über zwei Rillenkugellager 15 gelagert. Zwischen den beiden Kugellagern 15 ist ein Distanzring angeordnet, der ebenfalls die Drehachse 14 umschließt. Zudem ist im dargestellten Beispiel ein Lager in einer Vertiefung des Deckels 12 um die Drehachse 14 angeordnet. Ein weiteres Lager ist in einer korrespondierenden Vertiefung im Hauptkörper 11 unterhalb des Messzahnrads 13 positioniert.

Über diese Komponenten, insbesondere durch das Rillenkugellager 15, soll ein reibungsarmes Drehen des Messzahnrads 13 ermöglicht werden.

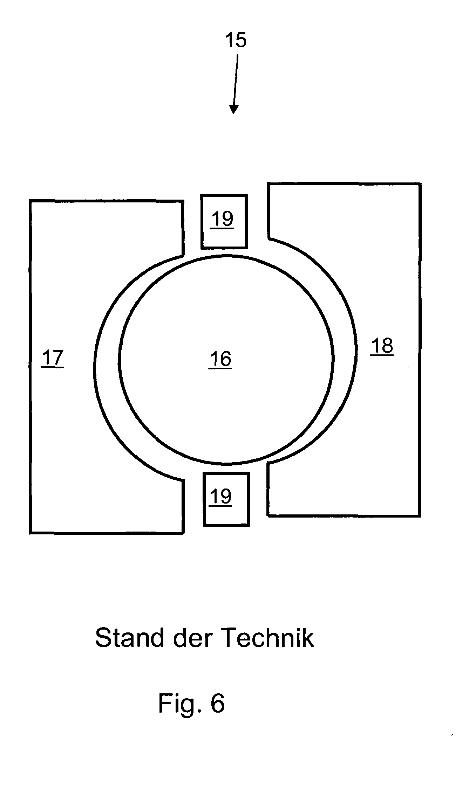

Ein solches Rillenkugellager 15 ist in Fig. 6 in einem Schnitt schematisch dargestellt. Es umfasst mehrere Kugeln oder Wälzkörper 16, die einen Innenring 17 und einen Außenring 18 kontaktieren. Der Innenring 17 umläuft die in Fig. 5 dargestellte Drehachse 14 und ist im Betrieb feststehend zu der Drehachse 14. Der Außenring 18 kontaktiert mit seiner Außenfläche das Messzahnrad 13 und ist im Betrieb feststehend zu diesem. Zudem sind der Innenring 17 und der Außenring 18 durch zwei Dichtungsscheiben 19 verbunden und ein nicht-dargestellter Käfig hält die Wälzkörper 16 innerhalb des Kugellagers 15.

Bei diesem Kugellager 15 ist ein Spiel zwischen den Komponenten vorhanden, das heißt, unerwünschte Bewegungen zwischen den Komponenten des Kugellagers 15 sind möglich. Dies ist in Fig. 6 durch einen Versatz zwischen dem Innenring 17 und dem Außenring 18 dargestellt. Um dieses Spiel zu reduzieren, können Ausgleichsscheiben an der in Fig. 6 dargestellten oberen und/oder unteren Seite angeordnet sein. Hierdurch kann zwar ein unruhiges Laufen der Messzahnräder reduziert werden. Dennoch kann ein leichtes Kippen der Messzahnräder eintreten, wodurch Ungenauigkeiten in der Durchflussmessung resultieren. Auch können durch das Spiel Leckströme entlang der Wälzkörper 16 auftreten. Diese Leckströme wirken sich nachteilig auf die Genauigkeit der Durchflussbestimmung aus. Weiterhin führt eine Reibung bei Drehungen des Messzahnrads nicht nur zu Messungenauigkeiten, sondern auch zu einem großen Anlaufmoment, womit Messungen geringer Fluidströme verhindert werden.

Aus JP S62 51232 ist ein Zahnraddurchflussmesser bekannt. Bei diesem werden zwei Messzahnräder verwendet. Zu deren Lagerung ist jeweils in einem Innenraum des Messzahnrads ein Ringelement vorhanden, welches mehrere Kugeln berührt. Über die Kugeln wird eine reibungsarme Lagerung bereitgestellt.

Weitere Zahnraddurchflussmesser sind aus WO 2007/104517 und EP 0 393 294 A1 bekannt. Dabei werden jeweils zwei Messzahnräder verwendet, welche über Wälzlager gehalten werden.

Als eine **Aufgabe** kann erachtet werden, einen Zahnraddurchflussmesser bereitzustellen, der bei einfachem Aufbau eine möglichst präzise Durchflussmessung ermöglicht.

Diese Aufgabe wird durch einen Zahnraddurchflussmesser mit den Merkmalen des Anspruchs 1 gelöst.

Vorteilhafte Varianten des erfindungsgemäßen Zahnraddurchflussmessers sind Gegenstand der abhängigen Ansprüche und werden außerdem in der folgenden Beschreibung, insbesondere im Zusammenhang mit den Figuren, beschrieben.

Bei dem Zahnraddurchflussmesser der oben genannten Art ist erfindungsgemäß vorgesehen, dass zwischen jedem Messzahnrad und dem Boden sowie zwischen jedem Messzahnrad und dem Deckel jeweils ein Aufnahmebereich vorgesehen ist, in welchem zur Lagerung des jeweiligen Messzahnrads Rollelemente angeordnet sind, dass die Rollelemente das jeweilige Messzahnrad, den jeweiligen Drehschaft und den Boden oder Deckel direkt berühren, und dass die Rollelemente jeweils als Ganzes relativ zu dem Drehschaft, dem Messzahnrad und dem Boden oder Deckel, welche sie berühren, beweglich sind.

Um Leckströme und Reibungen zu reduzieren, ist ein möglichst kleines Kippmoment des Messzahnrads wünschenswert. Dies kann erreicht werden, wenn eine Drehachse der Rollelemente möglichst weit außen liegt. Die Erfindung beruht auf der Erkenntnis, dass eine Verschiebung der Drehachse nach außen durch Verwendung größerer herkömmlicher Kugellager nicht sinnvoll ist, weil die hiermit verbundene reduzierte Dicke des Messzahnrads nicht ausreichend Stärke und Stabilität bietet. Als zentraler Gedanke der Erfindung werden deshalb Laufflächen der Rollelemente durch das Messzahnrad und den Drehschaft selbst gebildet. Vorteilhafterweise kann dadurch ein zur Lagerung erforderlicher Raum in radialer Richtung zum Drehschaft reduziert werden. Die Ausdehnung dieses Raums kann gleich einem Durchmesser der Rollelemente sein. Durch diesen reduzierten Raumbedarf für die Lagerung kann eine ausreichende Dicke und Materialstärke des Messzahnrads auch dann erreicht werden, wenn die Drehachse der Rollelemente zur Reduzierung des Kippmoments weit außen liegt.

Als ein Kerngedanke der Erfindung kann zudem erachtet werden, die zur Lagerung des mindestens einen Messzahnrads erforderlichen Komponenten zu reduzieren. So wird ein herkömmliches Rillenkugellager ersetzt durch einzelne Rollelemente oder Wälzkörper. Dabei entfällt der Innenring eines Kugellagers, welcher die Wälzkörper von dem Drehschaft trennt. Stattdessen berühren erfindungsgemäß die Rollelemente den Drehschaft direkt. In gleicher Weise entfällt der Außenring eines Kugellagers zwischen den Rollelementen und dem Messzahnrad. Stattdessen berühren die Rollelemente erfindungsgemäß das Messzahnrad direkt, ohne dass zusätzliche Komponenten zwischen diesen angeordnet sind.

Zudem sind über die Rollelemente die Messzahnräder an ihren Stirnseiten gelagert. Hierzu berühren erfindungsgemäß die Rollelemente, die sich im Aufnahmebereich zwischen Deckel und Messzahnrad befinden, sowohl den Deckel als auch das Messzahnrad direkt. Entsprechend berühren Rollelemente im Aufnahmebereich zwischen Boden und Messzahnrad sowohl den Boden als aus das Messzahnrad direkt. Vorteilhafterweise dienen somit die Rollelemente in einem Aufnahmebereich sowohl der Lagerung in Richtung einer Rotationsachse, das heißt in Längsrichtung des Drehschafts, als auch in einer Radialrichtung hierzu.

Das Spiel an den zur Lagerung vorgesehenen Komponenten wird durch die Fertigungstoleranzen aller Komponenten bestimmt. Indem gegenüber herkömmlichen Kugellagern die Anzahl dieser Komponenten erfindungsgemäß reduziert ist, wird das gesamte Spiel an der Lagerung vorteilhafterweise reduziert, ohne dass strengere Fertigungstoleranzen für etwa die Rollelemente erforderlich sind.

Unter einem Rollelement kann ein einziger rundlicher Körper verstanden werden. Demgemäß sind die Rollelemente jeweils als Ganzes relativ zum benachbarten Drehschaft, dem benachbarten Messzahnrad, dem Deckel und dem Boden beweglich. Unter einem Rollelement ist also kein gesamtes Kugellager zu verstehen, welches auch Komponenten umfasst, die nicht relativ zum Drehschaft, oder zum Messzahnrad beweglich sind.

Als besonderer Vorteil der Erfindung kann angesehen werden, dass durch die reduzierte Anzahl an Komponenten zwischen einem Messzahnrad und seiner Drehachse das Spiel dieser Komponenten reduziert wird. Zum einen können hierdurch Leckströme entlang der Drehachse reduziert werden. Zum anderen wird hierdurch eine Kippbewegung der Messzahnräder verringert. Hierdurch steigt die Genauigkeit der Fluidmenge, die mit einer Zahnraddrehung befördert wird.

Ein weiterer wesentlicher Vorteil des erfindungsgemäßen Zahnraddurchflussmessers ist eine bessere Spülbarkeit. Diese wird durch die gegenüber herkömmlichen Zahnraddurchflussmessern mit Rillenkugellagern reduzierte Anzahl an Komponenten zur Lagerung der Messzahnräder erreicht. Eine gründliche Reinigung kann besonders bedeutsam sein, wenn es sich bei dem Fluid um beispielsweise einen Lack handelt.

Auch in Bezug auf die Messung sehr geringer Fluidmengen werden deutliche Verbesserungen erreicht. Herkömmliche Zahnraddurchflussmesser erfordern wegen der vergleichsweise hohen Reibung große Anlaufkräfte und können erst ab einem Volumenstrom von etwa 5 cm³ pro Minute genaue Ergebnisse liefern. Hingegen können durch die reduzierte Reibung mit dem erfindungsgemäßen Zahnraddurchflussmesser bereits Volumenströme von 2 cm³ pro Minute oder geringer ermittelt werden.

Die bei der Erfindung eingesetzte Messeinrichtung kann prinzipiell beliebiger Art sein und beispielsweise durch einen kapazitiven, einen induktiven oder einen optischen Sensor oder auch durch einen Ultraschallsensor ausgeführt sein. Hiermit kann beispielsweise erfasst werden, ob an einer Messposition ein Zahn eines der Messzahnräder anwesend ist. Mit dieser Information kann die Anzahl vorbeilaufender Zähne pro Zeiteinheit ermittelt werden. Die Fluidmenge, die pro Zwischenraum von zwei benachbarten Zähnen transportiert werden kann, ist bekannt oder in einer Kalibriermessung bestimmbar. Daher kann aus der Anzahl der an der Messposition detektierten Zähne pro Zeiteinheit, das heißt aus der Zahnraddrehung, die durchfließende Fluidmenge pro Zeiteinheit bestimmt werden.

Die Auswertemittel zum Ermitteln eines Durchflusses können entweder in einem gemeinsamen Gehäuse mit der Zahnradkammer angeordnet sein oder auch in einer externen Einrichtung, beispielsweise Software-implementiert an einem Computer.

Bei einer bevorzugten Variante des erfindungsgemäßen Zahnraddurchflussmessers ist jeder Drehschaft durch eine feststehende Drehachse gebildet, zu welcher das jeweilige Messzahnrad über die Rollelemente drehbar gelagert ist. Der Drehschaft kann fest mit dem Deckel und/oder Boden verbunden sein. Das Messzahnrad kann eine mittige Öffnung von einer Stirnseite zur anderen aufweisen. Durch diese Öffnung verläuft der Drehschaft. Die Oberflächen der mittigen Öffnung können als Zahnradinnenseite bezeichnet werden. Bei dieser Ausführung erfolgt eine Lagerung des Messzahnrads in einer Richtung senkrecht zu seiner Rotationsachse dadurch, dass die Rollelemente sowohl den Drehschaft als auch gegenüberliegend hierzu das Messzahnrad berühren.

Alternativ ist bei einer weiteren bevorzugten Ausführungsvariante jeder Drehschaft durch eine umlaufende Achse gebildet, welche fest mit dem jeweiligen Messzahnrad verbunden ist. Hierdurch ist das Messzahnrad nur gemeinsam mit dem Drehschaft drehbar. Folglich soll hier auch eine reibende Berührung zwischen dem Drehschaft und dem Boden oder Deckel vermieden werden. Dazu weisen zunächst der Boden und der Deckel eine Ausnehmung auf, in welche sich der Drehschaft jeweils erstreckt. Sodann erfolgt eine Lagerung des Drehschafts und des Messzahnrads in Richtung quer zu dessen Rotationsachse dadurch, dass Rollelemente sowohl den Drehschaft als auch gegenüberliegend hierzu den Boden oder den Deckel berühren.

Bei einer bevorzugten Ausführungsform des erfindungsgemäßen Zahnraddurchflussmessers sind die Aufnahmebereiche jeweils durch einen Stufenspalt ausgebildet, der eine Vertiefung in einer Stirnseite des Messzahnrads oder in dem Boden und in dem Deckel ist. Dabei ist jeder Stufenspalt zu dem Drehschaft hin offen.

Ist der Drehschaft als umlaufende Achse gebildet, so weisen bevorzugt der Boden und der Deckel eine Ausnehmung auf, in welche sich der Drehschaft erstreckt. Bei dieser Ausführung ist für jedes Messzahnrad bevorzugt ein Stufenspalt im Boden und ein Stufenspalt im Deckel gebildet. Dabei ist jeder Stufenspalt zu der Ausnehmung hin, in welche sich der Drehschaft erstreckt, offen.

Bei einer feststehenden Drehachse als Drehschaft ist der Aufnahmebereich bevorzugt als Vertiefung im Messzahnrad gebildet. Ein Rollelement im Stufenspalt am Messzahnrad erstreckt sich somit bis zur Stirnseite oder über die Stirnseite hinaus und bis zur Zahnradinnenseite oder über die Zahnradinnenseite hinaus.

Damit ein Rollelement sowohl den Stufenspalt als auch den Drehschaft berührt, kann eine Strecke von einem Außenumfang des Drehschafts bis zu einem äußeren Ende des Stufenspalts gleich oder kleiner als der Durchmesser der Rollelemente sein. Um eine Berührung zwischen einem Messzahnrad und einem zugehörigen feststehenden Drehschaft zu vermeiden, oder um eine Berührung zwischen einem umlaufenden Drehschaft und dem Boden oder Deckel zu vermeiden, kann eine radiale Breite des Stufenspalts kleiner als der Durchmesser der Rollelemente gewählt sein. Beispielsweise kann die radiale Breite um bis zu 5% bis 20%, bevorzugt 10% bis 15%, kleiner sein, so dass die Rollelemente aus dem Stufenspalt zum Drehschaft hin hervorstehen. Hierdurch berühren die Rollelemente den Drehschaft, während ein unerwünschter Kontakt zwischen dem Messzahnrad und dem Drehschaft vermieden wird.

Prinzipiell kann eine Querschnittsform des Stufenspalts beliebig sein. Es ist aber bevorzugt, dass jeder Stufenspalt jeweils eine Bodenwand, die quer zu einer Rotationsachse des Messzahnrads verläuft, und eine Seitenwand, die in Richtung der Rotationsachse verläuft, aufweist und dass die Rollelemente die Seitenwand und die Bodenwand des Stufenspalts, in welchem sie angeordnet sind, direkt berühren.

Hierbei kann die Seitenwand entweder parallel zur Rotationsachse verlaufen oder in einem Neigungswinkel, der kleiner ist als ein Neigungswinkel der Bodenwand zur Rotationsachse. Indem die Rollelemente den Stufenspalt an zwei Stellen berühren, nämlich an der Seitenwand sowie an der Bodenwand, kann eine sichere Positionierung der Rollelemente mit wenig unerwünschtem Spiel erreicht werden.

Eine besonders leichte Reinigung oder Spülung eines Stufenspalts wird möglich, wenn jeder Stufenspalt einen abgerundeten oder schrägen Übergangsbereich zwischen seiner Bodenwand und seiner Seitenwand aufweist. Zudem werden hierdurch Hohlräume um die Rollelement herum reduziert, welche zu Leckströmen führen können oder Raum für ungewollte Ablagerungen bieten.

Diese Hohlräume zwischen dem Aufnahmering und darin aufgenommenen Rollelementen kann besonders weit reduziert werden, wenn ein Krümmungsradius des abgerundeten Übergangsbereichs von einem Radius der Rollelemente um höchstens 20%, bevorzugt höchstens 10%, abweicht. Dabei kann der Krümmungsradius größer oder auch kleiner als der Radius der Rollelemente sein.

Prinzipiell kann ein Übergangsbereich aber auch durch einen oder mehrere gerade Flächen gebildet sein, die schräg auf die Bodenwand und die Seitenwand stehen.

Es ist bevorzugt, dass in der Zahnradkammer mindestens zwei Messzahnräder ineinandergreifend angeordnet sind. Jedes der Messzahnräder kann zwischen seinen Zähnen an einem Bereich zu einer Wand der Zahnradkammer hin das Fluid durchlassen. Indem die Messzahnräder ineinandergreifen, wird ein Fluiddurchfluss zwischen den Messzahnrädern hindurch verhindert. Zur Ermittlung der Zahnraddrehung genügt eine Messung an einem der Messzahnräder. Die Messzahnräder weisen voneinander verschiedene Rotationsachsen auf und sind jeweils in der erfindungsgemäßen Weise über Rollelemente gelagert.

Unter einer Stirnseite, in welcher ein Aufnahmebereich geformt sein kann, soll eine Seite eines Messzahnrads verstanden werden, die quer oder senkrecht auf die Drehachse steht. Demnach kann jedes Messzahnrad zwei Aufnahmebereiche aufweisen, an welchen Rollelemente den Drehschaft kontaktieren. Durch diese zwei Berührungsbereiche wird eine stabile Orientierung des Messzahnrads bezüglich seines Drehschafts, das heißt in radialer Richtung zur Rotationsachse, erreicht. Stehen die Rollelemente von den beiden Stirnseiten hervor, kann zudem eine unerwünschte Reibung zwischen den Stirnseiten des Messzahnrads und dem Boden und dem Deckel vermieden werden.

Zur Bildung der Zahnradkammer ist bei einer bevorzugten Ausführung vorgesehen, dass der Boden und/oder der Deckel eine Ausnehmung aufweist, in welcher das mindestens eine Messzahnrad angeordnet ist. Hierbei ist die Zahnradkammer an den Stirnseiten des Messzahnrads sowie seitlich zu dem Messzahnrad durch den Boden und den Deckel begrenzt.

Anstelle dieses zweiteiligen Aufbaus einer Begrenzung der Zahnradkammer kann auch ein dreiteiliger Aufbau vorgesehen sein. Hierbei wird die Zahnradkammer ebenfalls an den Stirnseiten des mindestens einen Messzahnrads durch den Boden und den Deckel begrenzt. Zur seitlichen Begrenzung der Zahnradkammer ist allerdings ein Mittelstück vorgesehen, welches das mindestens eine Messzahnrad seitlich umgibt. Das Mittelstück, der Boden und der Deckel sind mindestens dreiteilig gebildet und werden miteinander verbunden. Die seitliche Begrenzung der Zahnradkammer soll als Begrenzung einer Ebene quer, insbesondere senkrecht, zur Rotationsachse des Messzahnrads verstanden werden. Gegenüber einem zweiteiligen Aufbau ist es bei dem vorliegenden dritteiligen Aufbau nicht erforderlich, dass der Boden eine Vertiefung zur Aufnahme von Messzahnrädern aufweist. Vorteilhafterwiese wird hierdurch eine präzise Bearbeitung einer zur Zahnradkammer hin zeigenden Seite des Bodens und des Deckels erleichtert.

Der Vorteil einer erleichterten Bearbeitung ist besonders bei Ausführungsformen bedeutsam, bei denen der Boden und der Deckel zur Zahnradkammer hin eine ebene Fläche zum Halten der Rollelemente aufweisen, wobei die Rollelemente die ebene Fläche direkt berühren. Ein Aufnahmebereich für ein Rollelement wird somit in einer ersten Richtung durch den Boden oder Deckel begrenzt, in einer weiteren Richtung durch den Drehschaft und gegenüberliegend zum Drehschaft sowie gegenüberliegend zum Boden oder Deckel durch das Messzahnrad.

Damit Reibung zwischen den Rollelementen und der jeweils angrenzenden Fläche des Bodens oder Deckels möglichst gering ist, sind Bereiche des Bodens oder Deckels, welche die Rollelemente berühren, vorzugsweise geglättet. Die Bearbeitungsschritte des Glättens können verhältnismäßig leicht und präzise ausgeführt werden, wenn der Boden und der Deckel nicht eine Vertiefung zur Aufnahme eines Messzahnrads aufweisen, wie bei einer zweiteiligen Bildung der Zahnradkammer erforderlich, sondern zumindest im Bereich der Zahnradkammer und über eine seitliche Begrenzung der Zahnradkammer hinaus keine hervorstehenden Abschnitte aufweisen. Ein zweiteiliger Aufbau kann jedoch ebenfalls bevorzugt sein, etwa auf Grund der reduzierten Anzahl an exakt zu fertigenden Komponenten.

Um Abrieb oder Verschleiß der zur Lagerung eingesetzten Komponenten zu reduzieren, sind Oberflächen der Rollelemente bevorzugt gehärtet. Auch die Messzahnräder und/oder der Boden und/oder Deckel und/oder die Drehschäfte können zumindest in Bereichen zu den Rollelementen hin gehärtet sein oder eine Beschichtung aufweisen, deren Härte höher ist als die eines zur Beschichtung benachbarten Materials. So können beispielsweise Wände der Aufnahmebereiche der Messzahnräder gehärtet sein, während andere Bereiche der Messzahnräder nicht unbedingt gehärtet sind. In ähnlicher Weise kann vorgesehen sein, dass die Aufnahmebereiche der Messzahnräder mit einer Beschichtung versehen sind, deren Härte höher ist als die des Messzahnrads.

Das Leiten eines Fluids zur Zahnradkammer hin und aus der Zahnradkammer heraus kann prinzipiell in beliebiger Weise durch Kanäle in Boden, Deckel und Mittelstück erfolgen. Besonders präzise Messungen und eine vergleichsweise günstige Fertigung sind aber möglich, wenn das Mittelstück keinen Kanal zum Leiten des Fluids zur Zahnradkammer oder aus dieser heraus aufweist und dafür der Boden oder Deckel einen Fluideingang zum Leiten eines Fluids in die Zahnradkammer aufweist und der Boden oder der Deckel einen Fluidausgang zum Leiten des Fluids aus der Zahnradkammer aufweist. Dabei können Boden und Deckel unterschiedliche Ausdehnungen in Richtung der Rotationsachse aufweisen, insbesondere kann der Boden eine größere Ausdehnung als der Deckel aufweisen.

Zudem können durch einen dreiteiligen Aufbau der Boden und der Deckel auch für Messzahnräder verschiedener Dicke, also unterschiedlicher Ausdehnung in Richtung der Rotationsachse, verwendet werden. Allein das Mittelstück muss entsprechend der Dicke des jeweils einzusetzenden Messzahnrads gewählt werden.

Bei einer bevorzugten Ausführungsvariante des erfindungsgemäßen Zahnraddurchflussmessers sind in den Aufnahmebereichen Rollelemente einander berührend angeordnet. Um ein Einsetzten der Rollelemente in den Aufnahmebereich zu erleichtern, kann dabei eine Umfangslänge des Aufnahmebereichs größer sein als die Gesamtausdehnung der eingesetzten Rollelemente, so dass nicht alle Rollelemente einander berühren. Eine solche Anordnung kann insbesondere erreicht werden, wenn die Rollelemente in den Aufnahmebereichen frei von Kugellagerkäfigen angeordnet sind. Vorteilhafterweise entfällt hierdurch Reibung zwischen den Rollelementen und einem Käfig. Zudem kann eine größere Anzahl an Rollelementen gegenüber dem Fall einer beabstandeten Halterung der Rollelemente eingesetzt werden, was ebenfalls reibungsmindernd wirkt und einen ein besseren Kraftverlauf ermöglicht. Die Rollelemente können grundsätzlich beliebige rundliche Körper sein. Bevorzugt sind sie jedoch Kugeln. Aufgrund der Symmetrie von Kugeln sind vorteilhafterweise keine Mittel zur Ausrichtung der Kugeln im Aufnahmebereich erforderlich. Alternativ können die Rollelemente aber auch die Form eines Zylinders haben, dessen Stirnseiten nach außen gewölbt sind.

Experimente haben gezeigt, dass ein Kippen des Messzahnrads besonders gering ist, wenn die Kugeln verhältnismäßig klein sind im Vergleich zu Kugeln von Kugellagern bei herkömmlichen Zahnraddurchflussmessern. So weisen bei einer Ausführungsform der Erfindung die Kugeln einen Durchmesser von kleiner als 2 mm, bevorzugt kleiner als 1,3 mm auf.

Weitere Merkmale und Vorteile der Erfindung werden mit Bezug auf die beigefügten schematischen Zeichnungen beschrieben. Hierin zeigen:
- Fig. 1:: eine Perspektivansicht eines Ausführungsbeispiels eines erfindungsgemäßen Zahnraddurchflussmessers;
- Fig. 2:: eine Querschnittsansicht des Zahnraddurchflussmessers aus Fig. 1;
- Fig. 3:: einen Ausschnitt eines Ausführungsbeispiels eines erfindungsgemäßen Zahnraddurchflussmessers;
- Fig. 4:: einen Ausschnitt eines weiteren Ausführungsbeispiels eines erfindungsgemäßen Zahnraddurchflussmessers;
- Fig. 5:: eine Querschnittsansicht eines herkömmlichen Zahnraddurchflussmessers und
- Fig. 6:: eine Querschnittsansicht eines bekannten Rillenkugellagers.

Gleiche und gleichwirkende Komponenten sind in den Figuren in der Regel mit denselben Bezugszeichen gekennzeichnet.

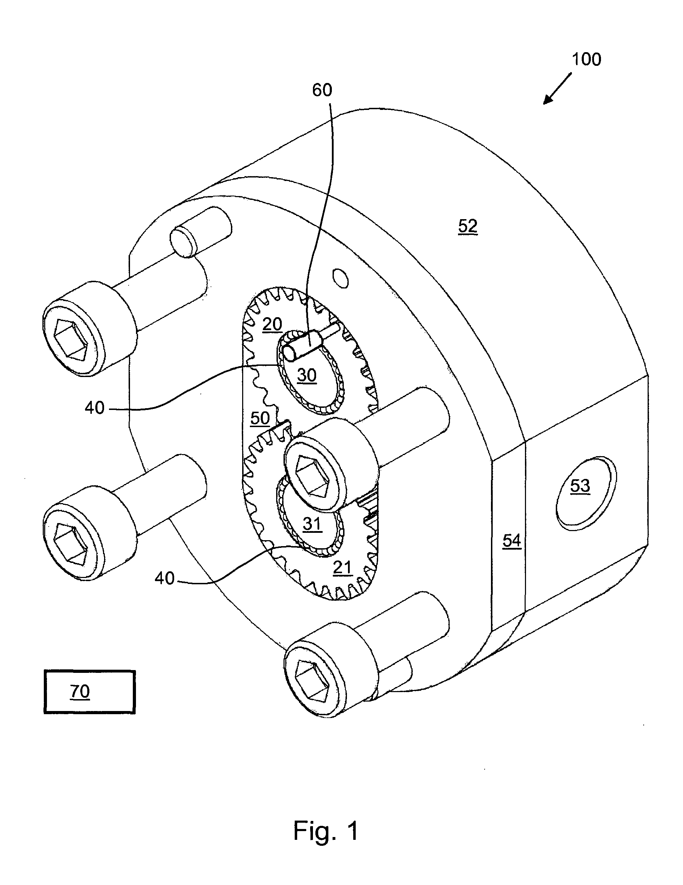

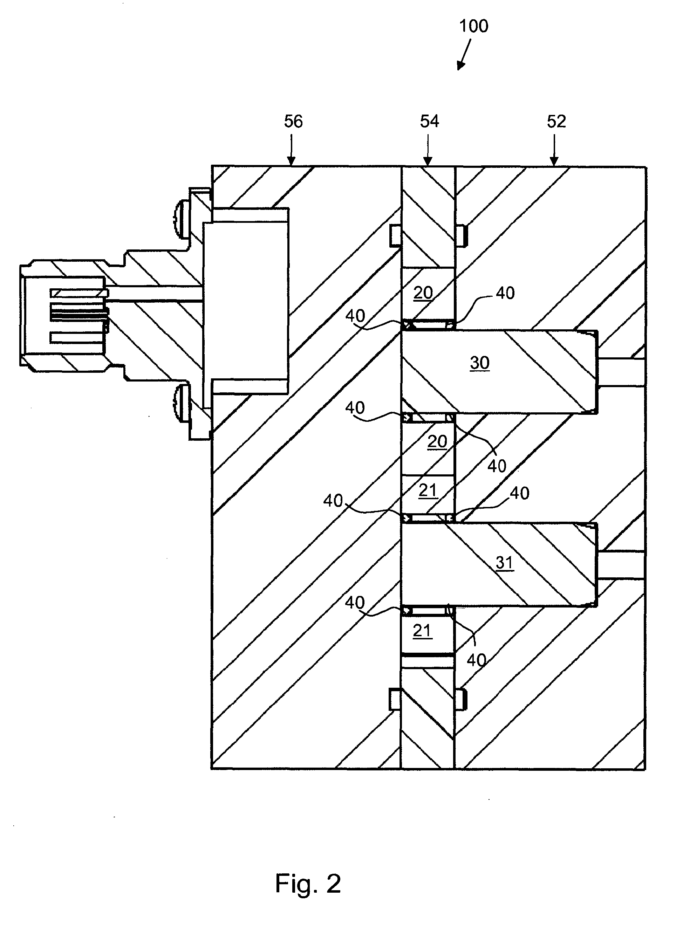

Ein Ausführungsbeispiel eines erfindungsgemäßen Zahnraddurchflussmessers 100 wird zunächst mit Bezug auf die Figuren 1 und 2 beschrieben. Dabei zeigt Figur 1 eine Perspektivansicht des Zahnraddurchflussmessers 100 und Figur 2 einen Schnitt hiervon, welcher durch beide Rotationsachsen des Zahnraddurchflussmessers 100 verläuft.

Als wesentliche Komponenten weist der Zahnraddurchflussmesser 100 eine Zahnradkammer 50, zwei hierin angeordnete Messzahnräder 20 und 21, jeweils einen Drehschaft 30 und 31 für die beiden Messzahnräder 20 und 21 sowie Rollelemente 40 zur Lagerung der Messzahnräder 20 und 21.

Prinzipiell kann auch ein einziges Messzahnrad 20 genügen oder es kann eine größere Anzahl als zwei Messzahnräder vorhanden sein.

Ein Fluid kann die Zahnradkammer 50 vorzugsweise ausschließlich an dessen Wand zwischen benachbarten Zähnen eines der Messzahnräder 20, 21 durchqueren. Durch diesen Durchfluss versetzt das Fluid die Messzahnräder 20, 21 in Bewegung. Indem die Drehung eines oder beider Messzahnräder 20, 21 ermittelt wird, kann auf den Fluiddurchfluss geschlossen werden. Zu diesem Zweck ist eine Messeinrichtung 60 vorgesehen. Diese ermittelt die Anzahl an Zähnen eines Messzahnrads, die an einer Messposition pro Zeiteinheit vorbeiziehen. Auswertemittel 70, die in Fig. 1 rein schematisch gezeigt sind, bestimmten mit den Messinformationen der Messeinrichtung 60 den Durchfluss des Fluids durch die Zahnradkammer 50.

Für eine präzise Ermittlung des Fluiddurchflusses ist es wünschenswert, dass zwischen zwei benachbarten Zähnen eines Messzahnrads 20, 21 stets dieselbe Menge an Fluid transportiert wird. Zudem sollen Reibungen, die beim Drehen der Messzahnräder 20, 21 auftreten, möglichst gering und zeitlich konstant sein. Deshalb ist es erstrebenswert, dass die Messzahnräder 20, 21 mit wenig Spiel gelagert sind und möglichst keine Kippbewegung ausführen können.

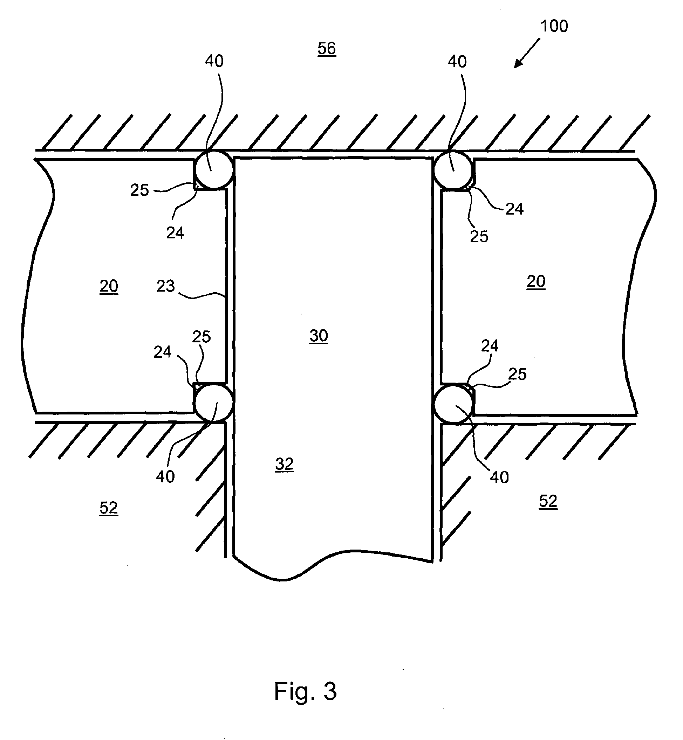

Erfindungsgemäß wird dies durch eine neuartige Lagerung des Messzahnräder 20, 21 an ihren jeweiligen Drehschaften 30, 31 erreicht. Diese Lagerung wird für ein erstes Ausführungsbeispiel mit Bezug auf Fig. 3 näher beschrieben. Diese zeigt einen Ausschnitt eines Messzahnrads 20 sowie der dazu benachbarten Komponenten. Dabei weist das Messzahnrad 20 eine mittige Öffnung auf, durch welche sich der Drehschaft 30 erstreckt, der hier als feststehende Drehachse 32 ausgeführt ist. Um eine reibungsarme Drehung des Messzahnrads 20 um den Drehschaft 30 zu ermöglichen, sind Rollelemente 40 vorgesehen, die sowohl das Messzahnrad 20 als auch den Drehschaft 30 direkt berühren. Hierin unterscheidet sich die Lagerung des Messzahnrads 20 von der Lagerung bei herkömmlichen Zahnraddurchflussmessern, welche ein Rillenkugellager verwenden, wie in Fig. 6 dargestellt. Bei einem solchen berühren Rollelemente nicht das Messzahnrad, sondern einen dazwischenliegenden Außenring des Kugellagers. Zudem berühren bei herkömmlichen Zahnraddurchflussmessern die Rollelemente nicht direkt einen Drehschaft eines Messzahnrads, sondern einen Innenring eines Kugellagers.

Indem erfindungsgemäß die Laufflächen der Rollelemente 40, die hier als Kugeln 40 gebildet sind, direkt durch das Messzahnrad 20 und den Drehschaft 30 ausgebildet sind, entfallen der Innenring, der Außenring und der Käfig eines Kugellagers.

Hierdurch kann ein Durchmesser einer Kugeldrehachse größer als bei herkömmlichen Lagerungen gewählt werden. Ein Kipppunkt des Messzahnrads 20 liegt damit weiter außen als bei herkömmlichen Zahnraddurchflussmessern, womit das Kippmoment des Messzahnrads 20 vorteilhafterweise geringer ist.

Zudem entfällt bei der Erfindung die Reibung der Kugeln am Käfig, wodurch sich das Messzahnrad leichter dreht. Ohne die zahlreichen Komponenten eines Kugellagers ist es zudem in leichter Weise möglich, alle Flächen an den Kugeln 40, dem Messzahnrad 20 und der Drehachse 30 zum Reinigen zu umspülen.

Bei dem erfindungsgemäßen Zahnraddurchflussmesser von Fig. 3 wird zudem auf einen separaten Abstandshalter verzichtet, der bei herkömmlichen Zahnraddurchflussmessern an einer Zahnradinnenseite zwischen den Rollelementen der oberen Stirnseite und Rollelementen der unteren Stirnseite des Messzahnrads angeordnet ist. Stattdessen kann bei der Erfindung diese Funktion durch den Körper des Messzahnrads 20 selbst erfüllt werden.

Um eine gewünschte Position der Kugeln 40 sicherzustellen, ist das Messzahnrad 20 mit zwei Aufnahmebereichen 24 versehen, in denen die Kugeln 40 angeordnet sind. Die beiden Aufnahmebereiche 24 können gefräst sein und sind als ringförmige Vertiefungen in den beiden Stirnseiten des Messzahnrads 20 ausgebildet. Dabei befinden sich die Aufnahmebereiche 24 an der Zahnradinnenseite 23, so dass die Aufnahmebereiche 24 zu der Drehachse 30 hin offen sind und eine Stufenvertiefung 25 bilden.

Zur leichteren Reinigung am Messzahnrad 20 kann vorgesehen sein, dass eine Seitenwand des Aufnahmebereichs 24, welche in Richtung der Rotationsachse des Messzahnrads 20 verläuft, und eine Bodenwand des Aufnahmebereichs 24, welche quer, insbesondere senkrecht, zur Rotationsachse steht, nicht in einem rechten Winkel aufeinandertreffen. Vielmehr kann ein schräger oder abgerundeter Übergangsbereich zwischen der Seitenwand und der Bodenwand eines Aufnahmebereichs 24 vorgesehen sein, wie in der rechten Hälfte von Fig. 3 dargestellt. Hierdurch können Toträume, die nicht oder nur schwer spülbar sind, vermieden werden.

Eine Breite eines Aufnahmebereiches 24, das heißt dessen Abmessung in einer Richtung radial zur Rotationsachse, ist im vorliegenden Fall kleiner als ein Durchmesser der Kugeln 40. Hierdurch ragen die Kugeln 40 nach innen über die Zahnradinnenseite 23 hinaus, so dass letztere nicht in Berührung mit dem Drehschaft 30 gerät. In ähnlicher Weise ist die Tiefe der Aufnahmebereiche 24 von der jeweiligen Stirnseite des Messzahnrads 20 aus gesehen kleiner als der Durchmesser der Kugeln 40. Hierdurch stehen die Kugeln 40 auch über die Stirnseite hinaus. Ein Boden 52 und ein Deckel 56, die an die Stirnseiten des Messzahnrads 20 angrenzen, berühren somit allein die Kugeln 40 und nicht das Messzahnrad 20. Damit wird die Reibung bei Drehung des Messzahnrads 20 verringert.

Der Boden 52 und der Deckel 56 sind im Bereich des Messzahnrads 20 plan und zur Reibungsverminderung geglättet.

Der Boden 52 weist eine Öffnung auf, durch welche der Drehschaft 30 durch die Zahnradkammer bis zum Deckel 56 verläuft. Dabei kann der Drehschaft 30 dichtend in die Öffnung des Bodens 52 eingesetzt oder gepresst sein. Alternativ kann der Drehschaft 30 auch einstückig mit dem Boden gebildet sein. Bei der dargestellten Ausführungsform grenzt der Drehschaft 30 an den Deckel 56 an. Alternativ kann der Deckel 56 aber auch eine Aufnahmeöffnung für den Drehschaft 30 aufweisen.

Zwischen dem Boden 52 und dem Deckel 56 ist ein Mittelstück 54 vorhanden, welches die Messzahnräder 20, 21 umgibt und somit die Zahnradkammer 50 seitlich begrenzt. Ein solches Mittelstück ist in den Figuren 1 und 2 gezeigt.

In diesen Figuren ist zudem gezeigt, dass der Deckel 52 einen Fluideingang 53 aufweist. Über diesen kann ein Fluid in die Zahnradkammer 50 geleitet werden. Ein hier nicht dargestellter Fluidausgang leitet das Fluid aus der Zahnradkammer 50 hinaus und ist im Deckel 52 oder Deckel 56 gebildet.

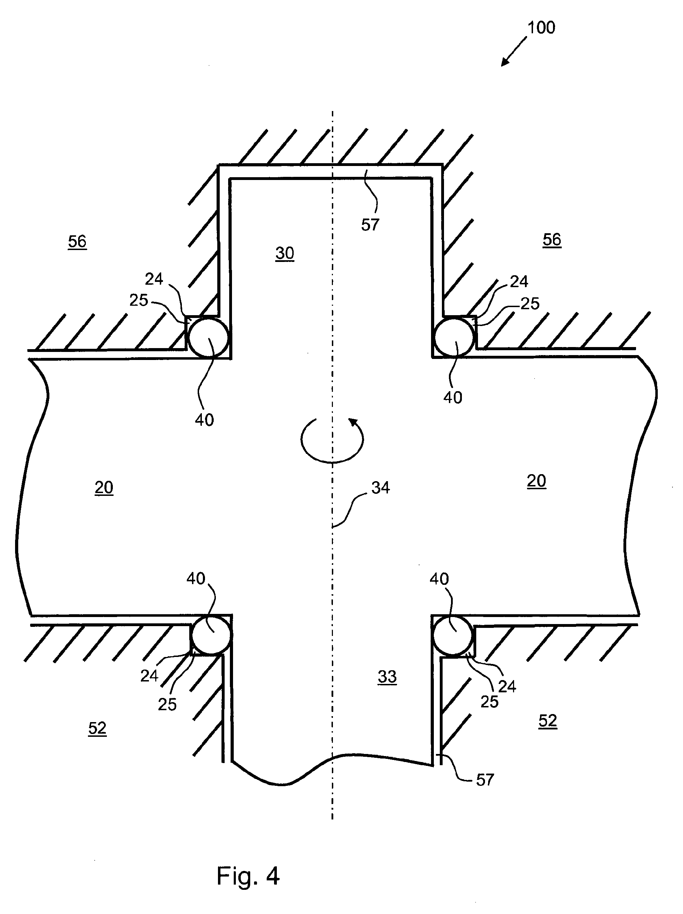

Ein weiteres Ausführungsbeispiel eines erfindungsgemäßen Zahnraddurchflussmessers 100 ist schematisch in Fig. 4 gezeigt. Im Unterschied zu dem Ausführungsbeispiel von Fig. 3 ist hier der Drehschaft 30 als umlaufende Drehachse 33 ausgeführt. Diese ist fest mit dem Messzahnrad 20 verbunden. Somit rotieren sowohl das Messzahnrad 20 als auch der Drehschaft 30 um die Rotationsachse 34.

Bei dieser Ausführung sind ebenfalls pro Messzahnrad 20 zwei Aufnahmebereiche 24 mit Rollelementen 40 vorgesehen. Die Aufnahmebereiche 24 sind hier jedoch nicht als Vertiefungen im Messzahnrad 20, sondern als Vertiefungen im Boden 52 und im Deckel 56 geformt. Die Rollelemente 40 berühren den jeweiligen Aufnahmebereich 24 und somit den Boden 52 oder Deckel 56 an zwei Seiten, nämlich an der Bodenwand und der Seitenwand des Aufnahmebereichs 24. Zudem berühren die Rollelemente 40 in einer Richtung parallel zur Rotationsachse 34 eine Stirnseite des Messzahnrads 20, womit eine Lagerung in Richtung der Rotationsachse 34 erfolgt. In der Ebene senkrecht hierzu erfolgt eine Lagerung, indem die Rollelemente 40 eine Mantelfläche des Drehschafts 30 berühren, welche parallel zur Rotationsachse 34 verläuft.

Der Boden 52 und der Deckel 56 weisen jeweils eine Ausnehmung 57 auf, in welche der Drehschaft 30 hinein ragt. Die Ausnehmungen 57 können als Vertiefungen oder als Durchbrüche ausgebildet sein. Die Aufnahmebereiche 24 für die Rollelemente 40 verlaufen ringförmig um die Ausnehmungen 57 und grenzen direkt an diese an. Dadurch bilden sie Stufenvertiefungen 25, die zur jeweiligen Stirnseite des Messzahnrads 20 und zur Ausnehmung 57 hin offen sind.

Schließlich ist hier die Zahnradkammer zweiteilig umschlossen. Der Boden 52 weist dabei eine in Fig. 4 nicht näher dargestellte Ausnehmung auf, in welche das Messzahnrad 20 eingesetzt ist. Durch diese Ausnehmung ist eine seitliche Begrenzung der Zahnradkammer definiert.

Durch die neuartige Lagerung ist die Reibung an den Messzahnrädern des erfindungsgemäßen Zahnraddurchflussmessers besonders gering. Zudem kann ein Kippen der Messzahnräder sowie das Auftreten von Leckströmen weitestgehend vermieden werden. Schließlich können durch die geringe Reibung auch besonders kleine Volumenströme gemessen werden.

## Patentansprüche

1. Zahnraddurchflussmesser zur Durchflussmessung eines Fluids mit einer Zahnradkammer (50), in welcher mindestens ein Messzahnrad (20, 21) angeordnet ist,
mit einem Boden (52) und einem Deckel (56), welche die Zahnradkammer (50) an Stirnseiten des mindestens einen Messzahnrads (20, 21) begrenzen, wobei mittig zu jedem Messzahnrad (20, 21) jeweils ein Drehschaft (30, 31) vorgesehen ist,
wobei jedes Messzahnrad (20, 21) drehbar gelagert ist und ein Fluid zum Drehen des mindestens einen Messzahnrads (20, 21) durch die Zahnradkammer (50) leitbar ist,
mit einer Messeinrichtung (60) zum Ermitteln einer Zahnraddrehung und mit Auswertemitteln (70) zum Ermitteln eines Durchflusses des Fluids durch die Zahnradkammer (50) auf Grundlage der Zahnraddrehung,
wobei zwischen jedem Messzahnrad (20, 21) und dem Boden (52) sowie zwischen jedem Messzahnrad (20, 21) und dem Deckel (56) jeweils ein Aufnahmebereich (24) vorgesehen ist, in welchem zur Lagerung des jeweiligen Messzahnrads (20, 21) Rollelemente (40) angeordnet sind, **dadurch gekennzeichnet,**
**dass** die Rollelemente (40) das jeweilige Messzahnrad (20, 21), den jeweiligen Drehschaft (30, 31) und den Boden oder Deckel (52, 56) direkt berühren, wobei Laufflächen der Rollelemente (40) durch das Messzahnrad (20, 21) und den Drehschaft (30, 31) selbst gebildet sind, und
**dass** die Rollelemente (40) jeweils als Ganzes relativ zu dem Drehschaft (30, 31), dem Messzahnrad (20, 21) und dem Boden oder Deckel (52, 56), welche sie berühren, beweglich sind.

2. Zahnraddurchflussmesser nach Anspruch 1,
**dadurch gekennzeichnet,**
**dass** in der Zahnradkammer (50) mindestens zwei Messzahnräder (20, 21) ineinandergreifend angeordnet sind.

3. Zahnraddurchflussmesser nach Anspruch 1 oder 2,
**dadurch gekennzeichnet,**
**dass** die Aufnahmebereiche (24) jeweils durch einen Stufenspalt (25) ausgebildet sind, der eine Vertiefung in einer Stirnseite des Messzahnrads (20, 21) oder in dem Boden (52) und in dem Deckel (56) ist, und
**dass** jeder Stufenspalt (25) zu dem Drehschaft (30, 31) hin offen ist.

4. Zahnraddurchflussmesser nach Anspruch 3,
**dadurch gekennzeichnet,**
**dass** jeder Stufenspalt (25) jeweils eine Bodenwand, die quer zu einer Rotationsachse (34) des Messzahnrads (30, 31) verläuft, und eine Seitenwand, die in Richtung der Rotationsachse (34) verläuft, aufweist und
**dass** die Rollelemente (40) die Seitenwand und die Bodenwand des Stufenspalts (25), in welchem sie angeordnet sind, direkt berühren.

5. Zahnraddurchflussmesser nach Anspruch 3 oder 4,
**dadurch gekennzeichnet,**
**dass** jeder Stufenspalt (25) einen abgerundeten oder schrägen Übergangsbereich zwischen seiner Bodenwand und seiner Seitenwand aufweist.

6. Zahnraddurchflussmesser nach einem der Ansprüche 1 bis 5,
**dadurch gekennzeichnet,**
**dass** jeder Drehschaft (30, 31) durch eine feststehende Drehachse (32) gebildet ist, zu welcher das jeweilige Messzahnrad (20, 21) über die Rollelemente drehbar gelagert ist.

7. Zahnraddurchflussmesser nach einem der Ansprüche 1 bis 5,
**dadurch gekennzeichnet,**
**dass** jeder Drehschaft (30, 31) durch eine umlaufende Achse (33) gebildet ist, welche fest mit dem jeweiligen Messzahnrad (20, 21) verbunden ist.

8. Zahnraddurchflussmesser nach einem der Ansprüche 1 bis 7,
**dadurch gekennzeichnet,**
**dass** die Zahnradkammer (50) seitlich durch ein Mittelstück (54) begrenzt ist, welches das mindestens eine Messzahnrad (20, 21) seitlich umgibt, dass der Boden (52) und der Deckel (56) jeweils mit dem Mittelstück (54) verbunden sind und
**dass** der Boden (52), der Deckel (56) und das Mittelstück (54) mindestens dreiteilig gebildet sind.

9. Zahnraddurchflussmesser nach einem der Ansprüche 1 bis 7,
**dadurch gekennzeichnet,**
**dass** der Boden (52) und/oder der Deckel (56) eine Ausnehmung aufweist, in welcher das mindestens eine Messzahnrad (20, 21) angeordnet ist, dass die Zahnradkammer (50) an den Stirnseiten des Messzahnrads (20, 21) sowie seitlich zu dem Messzahnrad (20, 21) durch den Boden (52) und den Deckel (56) begrenzt ist.

10. Zahnraddurchflussmesser nach einem der Ansprüche 1 bis 9,
**dadurch gekennzeichnet,**
**dass** der Boden (52) und der Deckel (56) eine ebene Fläche zum Halten der Rollelemente (40) aufweisen, wobei die ebene Fläche geglättet ist und die Rollelemente (40) die ebene Fläche direkt berühren.

11. Zahnraddurchflussmesser nach einem der Ansprüche 1 bis 10,
**dadurch gekennzeichnet,**
**dass** zumindest Bereiche der Messzahnräder (20, 21) und/oder des Bodens (52) und des Deckels (56) und/oder der Drehschäfte (30, 31) gehärtet sind oder eine Beschichtung aufweisen, deren Härte höher ist als die eines zur Beschichtung benachbarten Materials.

12. Zahnraddurchflussmesser nach einem der Ansprüche 1 bis 11,
**dadurch gekennzeichnet,**
**dass** in den Aufnahmebereichen (24) Rollelemente (40) einander berührend angeordnet sind.

13. Zahnraddurchflussmesser nach einem der Ansprüche 1 bis 12,
**dadurch gekennzeichnet,**
**dass** die Rollelemente (40) in den Aufnahmebereichen (24) frei von Kugellagerkäfigen angeordnet sind.

14. Zahnraddurchflussmesser nach einem der Ansprüche 1 bis 13,
**dadurch gekennzeichnet,**
**dass** die Rollelemente (40) Kugeln (40) sind.

## Claims

1. Gear flow meter for measuring the flow of a fluid, having
a gear chamber (50), in which at least one measuring gear wheel (20, 21) is arranged,
a bottom (52) and a cover (56) which delimit the gear chamber (50) on end faces of the at least one measuring gear wheel (20, 21),
wherein a respective rotation shaft (30, 31) is provided centrally relative to each measuring gear wheel (20, 21),
wherein each measuring gear wheel (20, 21) is rotatably mounted and a fluid is conveyable through the gear chamber (50) to rotate the at least one measuring gear wheel (20, 21),
and having a measuring unit (60) to detect a gear rotation and evaluation means (70) to determine a flow of the fluid through the gear chamber (50) on the basis of the gear rotation,
wherein a respective receiving area (24) is provided between each measuring gear wheel (20, 21) and the bottom (52) and also between each measuring gear wheel (20, 21) and the cover (56), in which receiving area (24) rolling elements (40) are arranged for mounting the respective measuring gear wheel (20, 21),
**characterized in that**
the rolling elements (40) directly contact the respective measuring gear wheel (20, 21), the respective rotation shaft (30, 31) and the bottom or cover (52, 56), wherein running surfaces of the rolling elements (40) are formed by the measuring gear wheel (20, 21) and the rotation shaft (30, 31) itself, and the rolling elements (40) are each movable as a whole relative to the rotation shaft (30, 31), the measuring gear wheel (20, 21) and the bottom or cover (52, 56) which they contact.

2. Gear flow meter according to claim 1,
**characterised in that**
at least two measuring gear wheels (20, 21) are arranged engaging in each other in the gear chamber (50).

3. Gear flow meter according to claim 1 or 2,
**characterised in that**
the receiving areas (24) are respectively formed by a stepped gap (25) which is a depression in an end face of the measuring gear wheel (20, 21) or in the bottom (52) and in the cover (56), and
each stepped gap (25) is open towards the rotation shaft (30, 31).

4. Gear flow meter according to claim 3,
**characterised in that**
each stepped gap (25) respectively comprises a bottom wall which extends transversely relative to a rotation axis (34) of the measuring gear wheel (30, 31), and a side wall which extends in the direction of the rotation axis (34), and the rolling elements (40) directly contact the side wall and the bottom wall of the stepped gap (25), in which they are arranged.

5. Gear flow meter according to claim 3 or 4,
**characterised in that**
each stepped gap (25) has a rounded-off or inclined transition region between its bottom wall and its side wall.

6. Gear flow meter according to one of the claims 1 to 5,
**characterised in that**
each rotation shaft (30, 31) is formed by a fixed rotation axis (32), relative to which the respective measuring gear wheel (20, 21) is mounted so that it can be rotated via the rolling elements.

7. Gear flow meter according to one of the claims 1 to 5,
**characterised in that**
each rotation shaft (30, 31) is formed by a circulating axis (33) which is fixedly connected to the respective measuring gear wheel (20, 21).

8. Gear flow meter according to one of the claims 1 to 7,
**characterised in that**
the gear chamber (50) is laterally delimited by a middle element (54) which laterally surrounds the at least one measuring gear wheel (20, 21),
the bottom (52) and the cover (56) are respectively connected to the middle element (54), and
the bottom (52), the cover (56) and the middle element (54) are formed in at least three parts.

9. Gear flow meter according to one of the claims 1 to 7,
**characterised in that**
the bottom (52) and / or the cover (56) has / have a recess, in which the at least one measuring gear wheel (20, 21) is arranged,
the gear chamber (50) is delimited on the end faces of the measuring gear wheel (20, 21) and laterally to the measuring gear wheel (20, 21) by the bottom (52) and the cover (56).

10. Gear flow meter according to one of the claims 1 to 9,
**characterised in that**
the bottom (52) and the cover (56) have a planar surface to hold the rolling elements (40), wherein the planar surface is smoothened and the rolling elements (40) directly contact the planar surface.

11. Gear flow meter according to one of the claims 1 to 10,
**characterised in that**
at least regions of the measuring gear wheels (20, 21) and / or of the bottom (52) and of the cover (56) and / or of the rotation shafts (30, 31) are hardened or have a coating, of which the hardness is greater than that of a material adjacent to the coating.

12. Gear flow meter according to one of the claims 1 to 11,
**characterised in that**
rolling elements (40) are arranged in the receiving areas (24) in contact with each other.

13. Gear flow meter according to one of the claims 1 to 12,
**characterised in that**
the rolling elements (40) are arranged in the receiving areas (24) free of ball bearing cages.

14. Gear flow meter according to one of the claims 1 to 13,
**characterised in that**
the rolling elements (40) are balls (40).

## Revendications

1. Débitmètre à roue dentée pour mesurer le débit d'un fluide avec une chambre à roue dentée (50) dans laquelle est agencée au moins une roue dentée de mesure (20, 21),
avec un fond (52) et un couvercle (56), lesquels limitent la chambre à roue dentée (50) sur les côtés frontaux de la au moins une roue dentée de mesure (20, 21), une tige rotative (30, 31) étant prévue au milieu pour chaque roue dentée de mesure (20, 21),
chaque roue dentée de mesure (20, 21) étant montée de manière à pivoter et un fluide étant dirigeable pour faire pivoter la au moins une roue dentée de mesure (20, 21) dans la chambre à roue dentée (50),
avec un dispositif de mesure (60) pour déterminer une rotation de la roue dentée et avec des moyens d'évaluation (70) pour déterminer un débit du fluide traversant la chambre à roue dentée (50) sur la base de la rotation de la roue dentée,
étant prévue, entre chaque roue dentée de mesure (20, 21) et le fond (52) ainsi qu'entre chaque roue dentée de mesure (20, 21) et le couvercle (56), à chaque fois, une zone de réception (24) dans laquelle sont agencés des éléments de roulement (40) pour le positionnement de la chaque roue dentée de mesure correspondante (20, 21),
**caractérisé en ce que**
les éléments de roulement (40) sont en contact direct avec la roue dentée de mesure (20, 21) correspondante, la tige rotative (30, 31) correspondante et le fond ou le couvercle (52, 56), des surfaces de roulement des éléments de roulement (40) étant elles-mêmes formées par la roue dentée de mesure (20, 21) et la tige rotative (30, 31), et
les éléments de roulement (40) sont mobiles, à chaque fois tout entiers, relativement à la tige rotative (30, 31), à la roue dentée de mesure (20, 21) et au fond ou au couvercle (52, 56) avec lesquels ils sont en contact.

2. Débitmètre à roue dentée selon la revendication 1,
**caractérisé en ce que**
dans la chambre à roue dentée (50), au moins deux roues dentées de mesure (20, 21) sont agencées de sorte à être imbriquées.

3. Débitmètre à roue dentée selon la revendication 1 ou 2,
**caractérisé en ce que**
les zones de réception (24) sont chacune formées grâce à un espace de cran (25) qui est une cavité dans un côté frontal de la roue dentée de mesure (20, 21) ou dans le fond (52) et dans le couvercle (56), et
chaque espace de cran (25) est ouvert en direction de la tige rotative (30, 31).

4. Débitmètre à roue dentée selon la revendication 3,
**caractérisé en ce que**
chaque espace de cran (25) présente une paroi de fond qui est transversale à un axe de rotation (34) de la roue dentée de mesure (30, 31) et une paroi latérale s'étendant dans la direction de l'axe de rotation (34) et
les éléments de roulement (40) sont en contact direct avec la paroi latérale et la paroi de fond de l'espace de cran (25) dans lequel ils sont agencés.

5. Débitmètre à roue dentée selon la revendication 3 ou 4,
**caractérisé en ce que**
chaque espace de cran (25) présente une zone de transition arrondie ou en biais entre sa paroi de fond et sa paroi latérale.

6. Débitmètre à roue dentée selon une des revendications 1 à 5,
**caractérisé en ce que**
chaque tige rotative (30, 31) est formée par un axe rotatif (32) fixe, par rapport auquel la roue dentée de mesure (20, 21) correspondante est montée de manière à pouvoir pivoter via les éléments de roulement.

7. Débitmètre à roue dentée selon une des revendications 1 à 5,
**caractérisé en ce que**
chaque tige de rotation (30, 31) est formée par un axe rotatif (33), lequel est fixement lié à la roue dentée de mesure (20, 21) correspondante.

8. Débitmètre à roue dentée selon une des revendications 1 à 7,
**caractérisé en ce que**
la chambre à roue dentée (50) est limitée sur le côté par un élément central (54), lequel entoure sur le côté la au moins une roue dentée de mesure (20, 21),
le fond (52) et le couvercle (56) sont chacun liés avec l'élément central (54) et le fond (52), le couvercle (56) et l'élément central (54) sont composés d'au moins trois éléments.

9. Débitmètre à roue dentée selon une des revendications 1 à 7,
**caractérisé en ce que**
le fond (52) et/ou le couvercle (56) présente(nt) une exclusion, dans laquelle la au moins une roue dentée de mesure (20, 21) est agencée,
la chambre à roue dentée (50) est limitée aux côtés frontaux de la roue dentée de mesure (20, 21) ainsi qu'à côté de la roue dentée de mesure (20, 21) par le fond (52) et le couvercle (56).

10. Débitmètre à roue dentée selon une des revendications 1 à 9,
**caractérisé en ce que**
le fond (52) et le couvercle (56) présentent une surface plane pour maintenir les éléments de roulement (40), la surface plane étant lissée et les éléments de roulement (40) étant en contact direct avec la surface plane.

11. Débitmètre à roue dentée selon une des revendications 1 à 10,
**caractérisé en ce que**
au moins des zones des roues dentées de mesure (20, 21) et/ou du fond (52) et du couvercle (56) et/ou des tiges de rotation (30, 31) sont durcies ou présentent un revêtement dont la dureté est plus élevée que celle du revêtement de la matière adjacente.

12. Débitmètre à roue dentée selon une des revendications 1 à 11,
**caractérisé en ce que**
dans les zones de réception (24), les éléments de roulement (40) sont agencés de manière à être en contact les uns avec les autres.

13. Débitmètre à roue dentée selon une des revendications 1 à 12,
**caractérisé en ce que**
les éléments de roulement (40) dans les zones de réception (24) sont agencés sans cages de roulement à billes.

14. Débitmètre à roue dentée selon une des revendications 1 à 13,
**caractérisé en ce que**
les éléments de rotation (40) sont des billes (40).
